# EUROPÄISCHE PATENTANMELDUNG

(11) **EP 2 711 899 A2**
(43) Veröffentlichungstag der Anmeldung: **26.03.2014**
(21) Anmeldenummer: 12196065.2
(22) Anmeldetag: 07.12.2012
(51) Int. Cl.: G07C 9/00

(54) **Vorrichtung zur optischen Gesichtsfelderkennung**

(30) Priorität: 21.09.2012 EP 12185484; 24.09.2012 EP 12185710
(71) Anmelder: BURG-WÄCHTER KG, 58540 Meinerzhagen (DE)
(72) Erfinder: Lüling, Harald, 58540 Meinerzhagen (DE)
(74) Vertreter: Stenger, Watzke & Ring

(57) **Zusammenfassung**

Die Erfindung betrifft eine Vorrichtung zur optischen Gesichtsfelderkennung, aufweisend Lichtquellen zur Beleuchtung des Gesichtes eines Nutzers mit sichtbarem und/oder infrarotem Licht und Sensoren (1) zum Empfang des von dem Gesicht reflektierten Lichtes. Da im Stand der Technik lediglich Vorrichtungen bekannt sind, welche aufwendige Anordnungen zweier separater Sensoren zum einen zur Detektion des sichtbaren und zum anderen zur Detektion des infraroten Lichtes aufweisen, ist es Aufgabe der vorliegenden Erfindung, eine einfach aufgebaute, vielseitig anwendbare Vorrichtung zu schaffen. Dies gelingt der Erfindung mit einer Vorrichtung, welche einen Sensor (1) zur Detektion sowohl des sichtbaren als auch des infraroten Lichtes und einen Filter für sichtbares Licht (3) aufweist, welcher in den bzw. aus dem Lichtweg zwischen Gesicht und Sensor (1) verschwenkbar ist.

## Beschreibung

Die Erfindung betrifft eine Vorrichtung zur optischen Gesichtsfelderkennung, aufweisend Lichtquellen zur Beleuchtung des Gesichtes eines Nutzers mit sichtbarem und/oder infrarotem Licht und Sensoren zum Empfang des von dem Gesicht reflektierten Lichtes.

Vorrichtungen der vorgenannten Art sind im Stand der Technik bereits bekannt. Unter anderem werden diese eingesetzt, um eine Zutrittsberechtigung eines Nutzers zu einem Gebäude oder Gebäudeteil festzustellen. Individuelle Zutrittsberechtigungen werden dabei im Zuge erhöhter Sicherheitsanforderungen und durch die immer häufigere Verwendung automatischer Zutrittssysteme wichtiger und finden einen immer weiteren Anwendungskreis. Dies resultiert u.a. auch daraus, dass die verfügbare Datenverarbeitungshardware immer leistungsfähiger wird und mittlerweile immer ausgeklügeltere Kontrollsysteme zu verwirklichen erlaubt. Die moderne Informationstechnologie erlaubt es zudem, enorme Datenmengen und Informationen bereitzustellen und zu verarbeiten.

Die Auswertung von biometrischen Merkmalen ist hinlänglich bekannt. Mittels seiner biometrischen Merkmale kann ein Individuum eindeutig identifiziert werden. Neben den Fingerabdrücken als bekannte biometrische Merkmale findet ebenso auch die Identifizierung über biometrische Merkmale des Gesichtes erhöhte Anwendung. Identifikationen und/oder Verifikationen von Personen werden in zunehmendem Maße über diese im Wesentlichen unveränderlichen oder sich nur geringfügig ändernden Kennzeichen der Personen durchgeführt. Die Merkmale des Gesichtes sind dabei nahezu einzigartig, so dass in der Regel die Merkmale des Gesichtsfeldes, sofern sie bekannt sind, einer Person als Identifikationselemente zugeordnet werden können. Die Identifizierung und/oder Verifikation der Person kann beispielsweise dazu benutzt werden, dieser Person bestimmte Rechte, beispielsweise Zutrittsberechtigungen, zuzuordnen, so dass über die Identifizierung oder Verifikation des Gesichtsfeldes beispielsweise eine Schließeinrichtung entriegelbar ist, so dass die zutrittsberechtigte Person einen bestimmten geschützten Bereich eines Gebäudes betreten kann. Zur Ermittlung der Zutrittsberechtigung werden die biometrischen Merkmale des Gesichtes mit einer Vielzahl von in einem Speicher gespeicherten Daten unterschiedlicher Nutzer verglichen. Es sind Datenverarbeitungseinrichtungen bekannt, die eine große Anzahl von Rechenoperationen in kurzer Zeit ausführen können, so dass grundsätzlich eine Identifikation von Nutzern auch in kurzer Zeit durchführbar ist.

Die optische Gesichtsfelderkennung (oder häufig auch Gesichtserkennung genannt) verwendet sowohl zweidimensionale als auch dreidimensionale Verfahren. Simple zweidimensionale Gesichtsfelderkennungsverfahren beinhalten eine geometrische Vermessung besonderer Merkmale, z.B. Augen, Nase, Mund. Hierbei wird deren Position, Abstand und Lage bestimmt. Weiterhin setzen heutige Verfahren zudem auf komplexe Berechnungen wie die Waveletanalyse oder Hauptkomponentenanalyse. Mit Hilfe dieser Analyseverfahren ergibt sich eine Erkennungsleistung von über 99%, d.h. nur einer von hundert Nutzern wird möglicherweise nicht erkannt. Diese Trefferrate liegt in der gleichen Größenordnung wie die aktueller Fingerabdruck- oder Iriserkennungsverfahren und übertrifft damit die Fähigkeiten der menschlichen Gesichtsfelderkennung. Neben dieser zweidimensionalen biometrischen Gesichtserkennung existiert ebenfalls ein Zweig, der auf die dreidimensionale Erfassung, beispielsweise mittels Streifenprojektion des Gesichts, setzt. Durch die zusätzlichen Informationen sollen eine höhere Erkennungsgenauigkeit und eine bessere Posenunabhängigkeit erzielt werden.

Es ist ebenfalls im Stand der Technik bekannt, Vorrichtungen zur optischen Gesichtsfelderkennung mit Türschlössern, insbesondere elektronischen Türschlössern, zu kombinieren. Die Türschlösser dienen dabei dazu, den unberechtigten Zutritt einer Person zu einem geschützten Bereich auszuschließen. Ohne eine entsprechende Berechtigung, beispielsweise die Bereitstellung eines gespeicherten, biometrischen Merkmals, ist es nicht möglich, das Türschloss gewaltfrei zu öffnen. Die Verwendung eines unbefugt angefertigten Nachschlüssels entfällt. Die Fälschung des hinterlegten biometrischen Merkmals ist zudem aufwendig, da dieses eine Reihe von Merkmalen umfasst, welche nicht mit einfachen Mitteln nachzustellen sind.

Im Rahmen der Gesichtsfelderkennung ist es üblich, je einen Sensor zur Detektion des sichtbaren Lichtes, beispielsweise eine Schwarz-Weiß-Kamera oder eine RGB-Kamera, als auch einen Sensor zur Detektion reflektierter Infrarotstrahlung einzusetzen. Dementsprechend ist für die Installation der beiden Sensoren eine umfangreiche Vorrichtung notwendig, die zwei separate Kameras, möglicherweise inklusive zweier separater Gehäuse, aufnehmen kann.

Ausgehend vom vorgenannten Stand der Technik ist es nun Aufgabe der Erfindung, eine Vorrichtung zur optischen Gesichtsfelderkennung zu schaffen, welche sowohl zur Detektion sichtbaren als auch infraroten Lichtes geeignet ist und gleichzeitig einen geringeren apparativen Aufbau erfordert. Zudem ist es auch Aufgabe der Erfindung, eine verbesserte Gesichtsfelderkennung zu ermöglichen, welche einen gegenüber dem Stand der Technik erhöhten Grad der Erkennung eines Gesichtes aufweist.

Zur Lösung der vorgenannten Aufgabe schlägt die Erfindung vor, dass die Vorrichtung einen Sensor zur Detektion sowohl des sichtbaren als auch des infraroten Lichtes und einen Filter für sichtbares Licht aufweist, welcher in den bzw. aus dem Lichtweg zwischen Gesicht und Sensor verschwenkbar ist. Mit der Erfindung wird somit eine Vorrichtung geschaffen, welche nur einen Sensor aufweist, welcher zur Detektion sowohl des sichtbaren als auch des infraroten Lichtes geeignet ist. Dadurch entfällt eine konstruktiv aufwendige Installation zweier separater Kameras, wobei gleichzeitig Platzbedarf und finanzieller Bedarf reduziert werden.

Die Vorrichtung zur optischen Gesichtsfelderkennung emittiert vorteilhaft mittels interner oder externer Lichtquellen Licht sowohl im sichtbaren (VIS) als auch im infraroten (NIR, IR) Wellenlängenspektrum. Die Lichtquellen können dabei insbesondere Leuchtdioden (LED) sein, welche platzsparend innerhalb oder außerhalb der Vorrichtung angeordnet werden können. Die Kombination von Licht unterschiedlicher Wellenlängen, beispielsweise sowohl im sichtbaren als auch im infraroten Bereich, ermöglicht die Detektion kleinerer als auch größerer Merkmale des Gesichtes eines Nutzers mit gleicher Messgenauigkeit. Ebenfalls lassen sich aufgrund des unterschiedlichen Reflektionsgrades einzelner Zonen des Gesichtes in Bezug auf unterschiedliche Wellenlängen des Lichtes Unterschiedsmerkmale vereinfacht feststellen. Besonders vorteilhaft ist dabei der Einsatz der LEDs, da diese besonders kostengünstig sind und somit zu einer kostengünstigen Herstellung der gesamten Vorrichtung beitragen. Durch den schwenkbaren Filter für sichtbares Licht, welcher in den bzw. aus dem Lichtweg zwischen dem Gesicht des Nutzers und dem Sensor verschwenkt werden kann, lässt sich die Vorrichtung leicht an unterschiedliche Lichtverhältnisse, beispielsweise bei Tag oder bei Nacht, anpassen.

Üblicherweise werden für die Gesichtsfelderkennung Schwarz-Weiß-Kameras oder sogenannte RGB-Kameras verwendet. Derartige RGB-Kameras nutzen ein RGB-Signal, bei dem die Farben Rot, Grün und Blau jeweils in einem eigenen Kanal übertragen bzw. gespeichert werden. RGB-Signale werden z.B. bei Computern über den VGA-Anschluss, Cinch-Stecker oder in der Videotechnik über den Scart-Anschluss übertragen. Gemäß der Erfindung kommt nunmehr lediglich eine einzige Kamera zum Einsatz. Da die sogenannten CCD-Sensoren (Charge Coupled Device) bzw. CMOS-Sensoren (Complementary Metal Oxide Semiconductor) herkömmlicher Schwarz-Weiß-Kameras bzw. RGB-Kameras grundsätzlich sowohl zur Detektion von sichtbarem als auch infrarotem Licht geeignet sind, kann die Erfindung allein mit einer modifizierten Schwarz-Weiß-Kamera oder RGB-Kamera ausgeführt werden, ohne dass zusätzlich eine Infrarotkamera erforderlich ist. Die erfindungsgemäße Kamera besteht dabei aus dem Sensor, einer Optik, Elektronikkomponenten und einem Filter für sichtbares Licht. Der Filter für sichtbares Licht ist geeignet, das sichtbare Licht herauszufiltern, so dass nur das Infrarotlicht den Kamerasensor erreicht. Dieser Filter für sichtbares Licht ist schwenkbeweglich so angeordnet, dass er in die optische Achse zwischen dem reflektierenden Objekt, d.h. dem Gesicht des Nutzers, und dem Sensor geschwenkt werden kann. Je nach den Umgebungsbedingungen oder Lichtverhältnissen wird der Filter für das sichtbare Licht aus der optischen Achse heraus- oder hereingeschwenkt. So ist es möglich, dass insbesondere bei einer Anwendung bei Nacht kein Filter in den Lichtweg vor dem Sensorchip eingeschwenkt ist, während für einen erfindungsgemäßen besonderen Betriebsmodus zur Gesichtfeldserkennung mittels Infrarotlicht der Filter für sichtbares Licht in den Lichtweg eingeschwenkt wird, so dass nur das infrarote Licht den Sensor erreicht. Gemäß dieser Betriebsweise können bevorzugt Merkmale unterhalb der Haut detektiert werden, die durch die Infrarotstrahlung für den Sensor sichtbar gemacht werden. Das ansonsten störende sichtbare Licht wird durch den Filter für sichtbares Licht zuverlässig herausgefiltert. Dieser Betriebsmodus ist auch beim Nachtbetrieb der Kamera möglich. Dabei wird die Kamera quasi von einer "normalen" Kamera zu einer Kamera für die Gesichtsfelderkennung. Diese Vorgehensweise weist eine erhöhte Erkennungszuverlässigkeit beispielsweise zur Steuerung eines Türschlosses auf, so dass das System beispielsweise nicht mit Nachbildungen eines Gesichts oder dgl. manipuliert werden kann. Beispielsweise die Merkmale unterhalb der Haut werden durch die entsprechende Infrarotbestrahlung für die Kamera sichtbar gemacht und zur Steuerung des Schlosses genutzt. Dabei wird berücksichtigt, dass beispielsweise Narben, Muttermale etc. bevorzugt eine andere Infrarotwellenlänge reflektieren als andere Hautstellen.

In der Regel wird der Filter für sichtbares Licht konstant zur Gesichtsfelderkennung mittels Infrarotlicht in die optische Achse eingeschwenkt. Lediglich in wenigen Ausnahmefällen ist ein Verschwenken dieses optischen Filters aus der optischen Achse vorgesehen. Von daher bestehen grundsätzlich die Möglichkeiten, den optischen Filter relativ zur optischen Achse schwenkbar auszugestalten oder aber auch derart in die Kamera zu integrieren, dass ein Verschwenken nicht möglich ist.

Die Erfindung sieht weiterhin vor, dass die Vorrichtung einen Infrarotfilter aufweist. Damit lässt sich ein besonderer Tagbetrieb der Vorrichtung verwirklichen, wobei der Infrarotfilter in die optische Achse zwischen dem Gesicht des Nutzers und dem Sensor eingeschwenkt wird, so dass nur das sichtbare Licht den Sensor erreichen kann. Dies ermöglicht vorteilhaft eine Detektion und Darstellung in "Echtfarben", so dass das von der Kamera detektierte Bild dem vom menschlichen Auge wahrgenommenen Bild entspricht.

Besonders vorteilhaft sind der Infrarotfilter und der Filter für sichtbares Licht unabhängig voneinander verschwenkbar. Dadurch ist es möglich, sowohl den einen als auch den anderen Filter separat in die optische Achse einzuschwenken oder alternativ auch beide Filter gleichzeitig ein- oder auszuschwenken. Alternativ kann jedoch auch lediglich der Infrarotfilter verschwenkbar ausgebildet sein, während der Filter für sichtbares Licht konstant im Lichtweg zwischen Gesicht und Sensor angeordnet ist. Dies empfiehlt sich insbesondere für Anwendungen, bei welchen stets das sichtbare Licht aus dem zum Sensor gelangenden Licht herausgefiltert werden soll, so dass nur das Infrarotlicht den Sensor erreicht.

Gemäß der Erfindung ist im Falle der Verwendung einer RGB-Kamera als Sensor zumindest ein RGB-Filter vorgesehen. Dabei werden gezielt die Rot-, Grün- und Blau-Anteile der Lichtstrahlung selektiert.

Im Sinne der Erfindung können sowohl der Filter für sichtbares Licht als auch der Infrarotfilter als Interferenzfilter ausgebildet sein. Interferenzfilter sind kostengünstig zu erwerben, so dass sich die Vorrichtung insgesamt preisgünstig auf dem Markt anbieten lässt.

Schließlich ist neben der vorgenannten Vorrichtung zur optischen Gesichtsfelderkennung auch eine Verwendung dieser Vorrichtung für die Ermittlung einer Zutrittsberechtigung eines Nutzers für einen bestimmten Bereich eines Gebäudes und zum automatischen Öffnen eines Türschlosses unter Verwendung wenigstens eines biometrischen Merkmals in die Erfindung mit einbezogen.

Im Folgenden werden Ausführungsbeispiele der Erfindung näher erläutert. Dabei werden drei Anwendungssituationen der Vorrichtung zur optischen Gesichtsfelderkennung dargestellt. Es zeigen:
- Fig. 1: Nachtbetrieb der Vorrichtung zur optischen Gesichtsfelderkennung,
- Fig. 2: Tagbetrieb der Vorrichtung zur optischen Gesichtsfelderkennung;
- Fig. 3: Gesichtserkennungsbetrieb der Vorrichtung zur optischen Gesichtsfelderkennung.

Die vorgenannten drei Betriebsarten können selbstverständlich auch variiert werden, so dass auch bei abweichenden Tageszeiten oder Anwendungssituationen eine individuell anpassbare Detektion möglich ist.

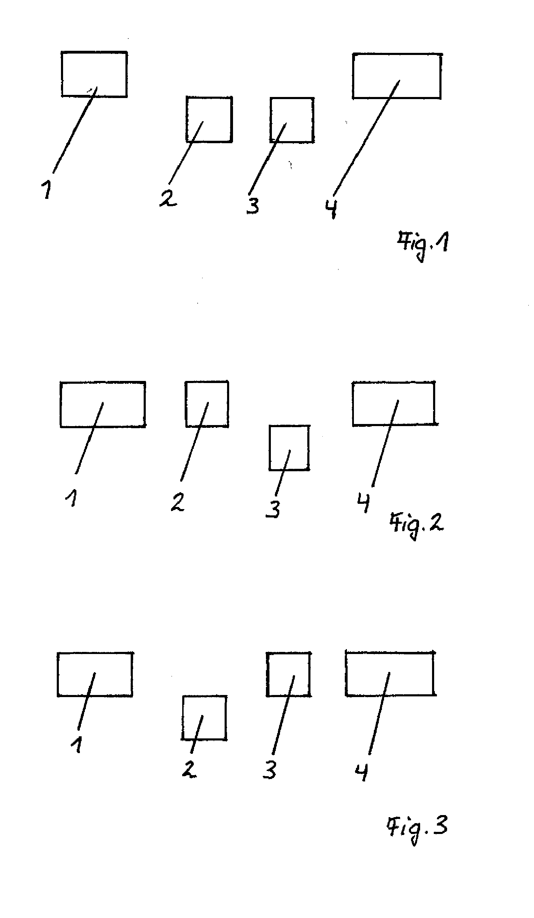

Die Figuren 1 bis 3 zeigen jeweils einen Sensor 1, einen Infrarotfilter 2, einen Filter für sichtbares Licht 3 und eine Optik 4. Der Sensor 1 kann ein CCD-Chip oder beispielsweise auch ein CMOS-Chip sein. Die Optik 4 besteht regelmäßig aus mehreren optischen Bauteilen, darunter insbesondere Linsen, welche insgesamt auch als Objektiv bezeichnet werden können. Die Filter 2, 3 sind bevorzugt als Interferenzfilter ausgebildet.

Für den Nachtbetrieb der Vorrichtung zur optischen Gesichtsfelderkennung gemäß Fig. 1 befindet sich auf der optischen Achse zwischen dem Sensor 1 und der Optik 4 kein Filter. In diesem Fall erreicht die gesamte Strahlung, welche die Optik 4 passiert, den Sensor 1. Die Strahlung umfasst dabei sowohl sichtbares als auch infrarotes Licht. Durch die Detektion von sowohl sichtbarem als auch infrarotem Licht kommt es zu einer Farbverfälschung, welche jedoch für den Nachtbetrieb nicht relevant ist. Wesentlich ist dabei eher, dass möglichst viel Licht auf den Sensor 1 fällt.

Gemäß dem in Fig. 2 dargestellten Tagbetrieb der Kamera ist in die optische Achse zwischen Sensor 1 und Optik 4 der Infrarotfilter 2 eingeschwenkt. Dadurch wird das Infrarotlicht herausgefiltert, so dass lediglich das sichtbare Licht den Sensor 1 erreicht. Dies ermöglicht vorteilhaft eine Detektion und Darstellung in "Echtfarben", so dass das von der Vorrichtung detektierte Bild dem vom menschlichen Auge wahrgenommenen Bild entspricht.

Fig. 3 zeigt einen besonderen Betriebsmodus der Kamera zur Gesichtserkennung mittels ausschließlich Infrarotlicht. Dabei ist zwischen Sensor 1 und Optik 4 der Filter für sichtbares Licht 3 angeordnet, so dass nur das infrarote Licht den Sensor 1 erreicht. In dieser Betriebsweise können bevorzugt Merkmale unterhalb der Haut detektiert werden, die durch die Infrarotstrahlung für die Kamera sichtbar gemacht werden Das ansonsten störende sichtbare Licht wird durch den Filter 3 zuverlässig herausgefiltert. Dieser Betriebsmodus ist auch beim Nachtbetrieb der Kamera möglich.

Die vorgenannten Betriebsarten lassen sich besonders für die Ermittlung einer Zutrittsberechtigung eines Nutzers für einen bestimmten Bereich eines Gebäudes und zum automatischen Öffnen eines Türschlosses unter Verwendung wenigstens eines biometrischen Merkmals einsetzen.

### Bezugszeichenliste

- 1: Sensor
- 2: Infrarotfilter
- 3: Filter für sichtbares Licht
- 4: Optik

## Patentansprüche

1. Vorrichtung zur optischen Gesichtsfelderkennung, aufweisend Lichtquellen zur Beleuchtung des Gesichtes eines Nutzers mit sichtbarem und/oder infrarotem Licht und Sensoren (1) zum Empfang des von dem Gesicht reflektierten Lichtes, **dadurch gekennzeichnet, dass** die Vorrichtung einen Sensor (1) zur Detektion sowohl des sichtbaren als auch des infraroten Lichtes und einen Filter für sichtbares Licht (3) aufweist, welcher in den bzw. aus dem Lichtweg zwischen Gesicht und Sensor (1) verschwenkbar ist.

2. Vorrichtung nach Anspruch 1, **gekennzeichnet durch** einen Infrarotfilter (2).

3. Vorrichtung nach Anspruch 1 oder 2, **dadurch gekennzeichnet, dass** der Sensor (1) ein CCD-Sensor ist.

4. Vorrichtung nach Anspruch 1 oder 2, **dadurch gekennzeichnet, dass** der Sensor (1) ein CMOS-Sensor ist.

5. Vorrichtung nach einem der vorhergehenden Ansprüche, **gekennzeichnet durch** eine in Propagationsrichtung des Lichtes vor den Filtern (2, 3) angeordnete Optik (4).

6. Vorrichtung nach einem der vorhergehenden Ansprüche, **dadurch gekennzeichnet, dass** die Vorrichtung einen RGB-Filter aufweist.

7. Vorrichtung nach einem der vorhergehenden Ansprüche, **dadurch gekennzeichnet, dass** der Infrarotfilter (2) und der Filter für sichtbares Licht (3) unabhängig voneinander verschwenkbar sind.

8. Vorrichtung nach einem der vorhergehenden Ansprüche, **dadurch gekennzeichnet, dass** der Infrarotfilter (2) verschwenkbar ist, während der Filter für sichtbares Licht (3) im Lichtweg zwischen Gesicht und Sensor (1) angeordnet ist.

9. Vorrichtung nach einem der vorhergehenden Ansprüche, **dadurch gekennzeichnet, dass** die Filter (2, 3) Interferenzfilter sind.

10. Verwendung einer Vorrichtung gemäß einem der Ansprüche 1 bis 9 für die Ermittlung einer Zutrittsberechtigung eines Nutzers für einen bestimmten Bereich eines Gebäudes und zum automatischen Öffnen eines Türschlosses unter Verwendung wenigstens eines biometrischen Merkmals.
